# EUROPÄISCHE PATENTSCHRIFT

(11) **EP 2 455 552 B1**
(45) Veröffentlichungstag und Bekanntmachung des Hinweises auf die Patenterteilung: **21.03.2018**
(21) Anmeldenummer: 11008589.1
(22) Anmeldetag: 26.10.2011
(51) Int. Cl.: E02F 9/22

(54) **Arbeitsgerät**
Work device
Appareil de travail

(30) Priorität: 17.11.2010 DE 102010051650
(43) Veröffentlichungstag der Anmeldung: 23.05.2012
(73) Patentinhaber: Liebherr-Hydraulikbagger GmbH, 88457 Kirchdorf/Iller (DE)
(72) Erfinder: Asam, Dirk, Dipl.-Ing., 89081 Ulm (DE); Fehse, Jochen, Dipl.-Ing., 71272 Renningen (DE)
(74) Vertreter: Laufhütte, Dieter

(56) Entgegenhaltungen:
- EP-A1- 2 052 889
- EP-A2- 2 148 014
- WO-A1-97/16371
- WO-A1-02/095243
- WO-A1-2008/013466

## Beschreibung

Die vorliegende Erfindung betrifft ein Arbeitsgerät mit einem über mindestens einen Arbeitsantrieb bewegbaren Element, wobei mindestens ein Energierückgewinnungszylinder zur Energierückgewinnung aus der Bewegung des bewegbaren Elementes vorgesehen ist, welcher eine mit Gas befüllte Kammer aufweist. Insbesondere handelt es sich bei dem Arbeitsgerät dabei um einen Bagger oder eine Maschine zum Materialumschlag. Die vorliegende Erfindung kommt dabei insbesondere bei solchen Arbeitsgeräten zum Einsatz, bei welchen der Arbeitsantrieb mindestens einen Arbeitshydraulikzylinder umfaßt, durch welchen das bewegbare Element bewegbar ist.

Die mit Gas befüllte Kammer des Energierückgewinnungszylinders wird bei solchen Arbeitsgeräten beim Absenken des bewegbaren Elements komprimiert und speichert so die potentielle Energie, um diese bei einer Aufwärtsbewegung des bewegbaren Elementes zur Unterstützung des Arbeitsantriebs wieder abzugeben.

Aus der DE 10 2008 034 582 A1 ist dabei ein Arbeitsgerät bekannt, bei welchem die mit Gas befüllte Kammer des Energierückgewinnungszylinders durch die mit Gas befüllte Bodenseite des Energierückgewinnungszylinders sowie die hohle Kolbenstange des Energierückgewinnungszylinders gebildet wird.

Aus der WO02/095243 A1 ist ein Arbeitsgerät, als Maschine zum Materialumschlag, mit einem über mindestens einen Arbeitsantrieb bewegbaren Element, wobei mindestens ein Energierückgewinnungszylinder zur Energierückgewinnung aus der Bewegung des bewegbaren Elements vorgesehen ist, welcher eine mit Gas befüllte Kammer aufweist. Das Arbeitsgerät weist weiterhin einen Sensor auf, über welchen die Temperatur des Gases in der mit Gas befüllten Kammer gemessen wird, wobei der Füllgrad der mit Gas befüllten Kammer in Abhängigkeit von der bestimmten Temperatur eingestellt wird. Aufgabe der vorliegenden Erfindung ist es, die Funktion eines solchen Arbeitsgerätes mit einem Energierückgewinnungszylinders mit einer mit Gas befüllten Kammer weiter zu verbessern.

Diese Aufgabe wird erfindungsgemäß durch ein Arbeitsgerät gemäß Anspruch 1 gelöst. Die vorliegende Erfindung betrifft dabei ein Arbeitsgerät mit einem über mindestens einen Arbeitsantrieb bewegbaren Element, wobei mindestens ein Energierückgewinnungszylinder zur Energierückgewinnung aus der Bewegung des bewegbaren Elementes vorgesehen ist, welcher eine mit Gas befüllte Kammer aufweist. Erfindungsgemäß ist dabei vorgesehen, dass die Ansteuerung des Arbeitsantriebes des bewegbaren Elementes in Abhängigkeit von der Temperatur des Gases in der mit Gas befüllten Kammer erfolgt. Insbesondere ist hierfür ein Systems zur direkten oder indirekten Bestimmung der Temperatur des Gases in der mit Gas befüllten Kammer vorgesehen, welches ein Signal liefert, das als Eingangsgröße der Steuerung dient.

Die Temperatur des Gases in der mit Gas befüllten Kammer des Energierückgewinnungszylinders hat einen erheblichen Einfluss auf die Kraft/Weg-Kennlinie des Energierückgewinnungszylinders. Mit dem erfindungsgemäßen System zur direkten oder indirekten Bestimmung der Temperatur des Gases wird erreicht, dass durch die Ansteuerung des Arbeitsantriebs, den Einfluss der Temperatur des Gases auf die Kennlinie des Energierückgewinnungszylinders berücksichtigt wird.

Die Ansteuerung des Arbeitsantriebs kompensiert somit die Veränderung der Kennlinie des Energierückgewinnungszylinders bei Veränderung der Temperatur des Gases in der mit Gas gefüllten Kammer zumindest teilweise.

Die Temperatur des Gases in der mit Gas befüllten Kammer kann dabei sowohl direkt als auch indirekt bestimmt werden. Vorteilhafterweise ist dabei ein Temperatursensor, welcher die Temperatur des Gases in der mit Gas befüllten Kammer direkt mißt, vorgesehen. Grundsätzlich ist hier zu berücksichtigen, dass die Gastemperatur als Regelgröße weniger geeignet ist, da sie je nach Bewegungszustand sehr stark schwankt.

Alternativ oder zusätzlich kann auch die Temperatur eines mit der Kammer wärmeleitend in Verbindung stehenden Elementes des Energierückgewinnungszylinders oder des Arbeitsgerätes gemessen werden. Die Temperatur des Gases kann auch durch andere indirekte Methoden bestimmt werden. So kann die Gastemperatur z. B. auch durch die Messung des Zylinderweg-Gasdruck-Verlaufs oder durch den Zylindergeschwindigkeits-Gasdruck-Verlauf bestimmt werden.

Vorteilhafterweise wird dabei das Temperatursignal über einen bestimmten Zeitraum gemittelt und als Eingangsgröße der Steuerung herangezogen. Erfindungsgemäß wird eine Ansteuergröße des Antriebs in Abhängigkeit von der Temperatur des Gases, insbesondere von der gemittelten Temperatur des Gases verändert. Insbesondere kann dabei in der Steuerung ein Kennfeld für die Steuergröße in Abhängigkeit von der Temperatur des Gases abgelegt sein.

In einer ersten Ausführungsform der vorliegenden Erfindung ist vorgesehen, dass die maximale Kraft des Arbeitsantriebs in Abhängigkeit von dem Temperatursignal eingestellt wird.

Insbesondere wird dabei die maximale Kraft des Arbeitsantriebs bei einer sinkenden Temperatur des Gases erhöht. Damit wird das Problem behoben, daß der Energierückgewinnungszylinder bei niedrigen Temperaturen des Gases einen niedrigeren Druck bzw. eine niedrigere Zylinderkraft zur Verfügung stellt als bei höheren Temperaturen, so daß bei Gastemperaturen unter einem gewissen Sollwert gegebenenfalls nicht die gewünschten Traglasten erzielbar sind. Um trotz einer niedrigen Gastemperatur dennoch die erforderlichen Traglasten erreichen zu können, wird daher die maximale Kraft des Arbeitsantriebs entsprechend erhöht, um so insgesamt die gewünschte Traglast zu erreichen.

Weiterhin steigt dann, wenn die Gastemperatur und damit der Gasdruck im Energierückgewinnungszylinder ansteigt, auch die insgesamt erreichbare Traglast an. Hierdurch können sich die Belastungen der Ausrüstung über einen zulässigen Wert hinaus vergrößern, was die Lebensdauer der Ausrüstung verringern kann. Erfindungsgemäß kann daher auch vorgesehen sein, daß die maximale Kraft des Arbeitsantriebs bei einer steigenden Temperatur des Gases im Gaszylinder verringert wird. Hierdurch wird der höheren Belastung der Ausrüstung durch den Energierückgewinnungszylinder entgegengewirkt.

Insbesondere kann dabei die maximale Kraft des Arbeitsantriebs verringert werden, wenn die Temperatur des Gases über einer Sollgastemperatur liegt. Weiterhin kann die maximale Kraft des Arbeitsantriebs erhöht werden, wenn die Temperatur unterhalb einer Sollgastemperatur liegt. Insbesondere erfolgt die Ansteuerung dabei in Abhängigkeit von der Kennlinie des Energierückgewinnungszylinders.

Vorteilhafterweise wird die maximale Kraft des Arbeitsantriebes dabei so eingestellt, daß die maximale Traglast des bewegbaren Elementes immer im wesentlichen gleich gehalten wird. Insbesondere wird dabei die Kraft des Arbeitsantriebes so eingestellt, daß die Summe aus der Kraft des Arbeitsantriebes und der Kraft des Energierückgewinnungszylinders unabhängig von der Temperatur des Gases einem gewünschten Sollwert entspricht.

In einer weiteren Ausführungsform der vorliegenden Erfindung kann die Arbeitsdynamik des Arbeitsantriebs in Abhängigkeit von dem Temperatursignal eingestellt werden. Hier kann der Einfluß der Temperatur auch die Arbeitscharakteristik des Gesamtsystems aus Energierückgewinnungszylinder und Arbeitsantrieb verändern.

Insbesondere wird dabei die Veränderung der Kennlinie des Energierückgewinnungszylinders bei sich ändernder Temperatur des Gases durch eine entsprechende Ansteuerung des Arbeitsantriebes ausgeglichen.

Die Arbeitsdynamik der Maschine (Heben und Senken des bewegbaren Elements) ist dabei üblicherweise auf die Charakteristik des Energierückgewinnungszylinders bei einer Solltemperatur abgestimmt. Liegt aber die Gastemperatur unter der gewünschten Solltemperatur, ist der Gasdruck geringer als der Sollgasdruck. Umgekehrt ist der Gasdruck größer als der Sollwert, wenn die Gastemperatur über der gewünschten Solltemperatur liegt. Dies führt dazu, daß eine Verringerung der Gastemperatur unter den Sollwert zu einer vergrößerten Senkgeschwindigkeit und einer verringerten Hubgeschwindigkeit führen würde, während eine Gastemperatur über der Solltemperatur zu einer verringerten Senkgeschwindigkeit und einer vergrößerten Hubgeschwindigkeit führen würde. Vorteilhafterweise wird nun der Arbeitsantrieb in Abhängigkeit von dem Temperatursignal so angesteuert, daß diesen Veränderungen der Arbeitsdynamik entgegengewirkt wird.

Hierdurch können zu große Hub- und Senkgeschwindigkeiten vermieden werden, durch welche Bauteilbelastungen steigen würden. Weiterhin wird die Bedienung des Arbeitsgerätes vereinfacht, da dem Bediener im wesentlichen immer die gleiche Arbeitsdynamik zur Verfügung gestellt wird. Zudem sind zu jedem Zeitpunkt sämtliche Tätigkeiten möglich. Insbesondere steht so immer eine ausreichend schnelle Bewegung des bewegbaren Elements zur Verfügung.

Insbesondere wird dabei in Abhängigkeit von der Gastemperatur, insbesondere der momentanen mittleren Gastemperatur die Ansteuerung der Hebe- und Senkfunktion des bewegbaren Elementes derart angepaßt, daß die maximale Hebe- und Senkgeschwindigkeit immer gleich gehalten werden kann.

Die vorliegende Erfindung kommt dabei insbesondere bei solchen Arbeitsgeräten zum Einsatz, bei welchen der Arbeitsantrieb mindestens einen Arbeitshydraulikzylinder umfaßt. Erfindungsgemäß wird nun die Ansteuerung der Hydraulik des Arbeitshydraulikzylinders in Abhängigkeit von dem direkten oder indirekten Temperatursignal vorgenommen. Insbesondere geht damit ein Signal eines Systems, welches die Temperatur des Gases im Energierückgewinnungszylinder direkt oder indirekt mißt, in die Steuerung der Hydraulik des Arbeitsgerätes ein.

In einer ersten Ausführungsform kann dabei vorgesehen sein, daß der Primärdruck der Hydraulik des Arbeitsantriebes in Abhängigkeit von dem Temperatursignal eingestellt wird. Um den Einfluß der Gastemperatur auf die Traglasten des Arbeitsgerätes zumindest teilweise auszugleichen, wird dabei erfindungsgemäß die primäre Druckbegrenzung der Arbeitshydraulikzylinder in Abhängigkeit der Gastemperatur im erforderlichen bzw. zulässigen Bereich temporär erhöht bzw. vermindert. Insbesondere wird dabei, um die gewünschten Traglasten trotz geringer Gastemperatur zu erreichen, die primäre Druckbegrenzung erhöht. Steigt dann die Gastemperatur in Folge der Arbeitstätigkeit oder in Folge externer Wärmezufuhr an, kann die Primärdruckbegrenzung des Arbeitszylinders wieder auf den üblichen Sollwert reduziert werden. Umgekehrt kann die primäre Druckbegrenzung der Auslegerzylinder in Abhängigkeit von der Gastemperatur temporär reduziert werden, um einer zu hohen Belastung der Ausrüstung entgegenzuwirken. Insbesondere kann dabei die Druckbegrenzung der Auslegerzylinder temporär reduziert werden, wenn die Temperatur des Gases über einen gewissen Wert steigt.

Insbesondere wird damit ein maximaler Primärdruck der Hydraulik des Arbeitsantriebes eingestellt. Vorteilhafterweise erfolgt dies durch die Ansteuerung eines Primärdruckbegrenzungsventils. Dieses begrenzt üblicherweise den Druck des von einer Pumpe zur Verfügung gestellten Hydraulikfluids auf einen maximalen Betriebsdruck.

In einem zweiten Ausführungsbeispiel ist vorgesehen, daß die Arbeitsdynamik des Arbeitshydraulikzylinders in Abhängigkeit von dem Temperatursignal eingestellt wird. Hierdurch kann in Abhängigkeit von der Gastemperatur, insbesondere von der momentanen mittleren Gastemperatur, die Ansteuerung der Hebe- und Senkfunktion des bewegbaren Elementes derart angepaßt werden, daß der Einfluß der Gastemperatur auf die maximale Senk- bzw. Hubgeschwindigkeit zumindest teilweise ausgeglichen wird.

Beispielsweise kann dabei in Abhängigkeit von der Gastemperatur der Vorsteuerdruck oder der Ansteuerstrom der entsprechenden Ventile für das Heben und/oder Senken des bewegbaren Elementes entsprechend angepaßt werden. Insbesondere kann dabei der Vorsteuerdruck und/oder der Ansteuerstrom erhöht oder reduziert werden, um den Ventilöffnungsquerschnitt und damit die maximale Geschwindigkeit beim Senken und/oder Heben anzupassen.

Insbesondere können beim Senken die Rohrbruchsicherungen entsprechend angesteuert werden. Beim Heben werden dagegen vorteilhafterweise die Ventile des Steuerblockes in Abhängigkeit von der Temperatur angesteuert.

Weiterhin kann der Schwenkwinkel der jeweiligen Hydraulikpumpe und/oder die Drehzahl des Dieselmotors in Abhängigkeit von der Temperatur des Gases in dem Energierückgewinnungszylinders angepaßt werden. Auch dies erfolgt vorteilhafterweise beim Heben des bewegbaren Elementes.

Durch die erfindungsgemäße Anpassung der Primärdruckbegrenzung der Arbeitshydraulik in Abhängigkeit von der Gastemperatur im Energierückgewinnungszylinder können die gewünschten Traglasten gesichert und die Ausrüstungsbelastung begrenzt werden.

Durch die Anpassung der Vorsteuerdrücke bzw. elektrischen Vorsteuersignale in Abhängigkeit der Gastemperatur im Energiespeicherzylinder kann dagegen sowohl die Arbeitsdynamik der Maschine und wie auch die Bauteilbelastung konstant gehalten werden.

Hierdurch kann der Energierückgewinnungszylinder als autarkes System agieren, während die temperaturabhängige Anpassung durch Modifikation des bestehenden Hydrauliksystems erfolgt.

Erfindungsgemäß kann dabei vorteilhafterweise die Einstellung anhand einer momentanen mittleren Gastemperatur erfolgen. Dabei kann innerhalb eines gewissen Zeitintervalls jeweils die mittlere Gastemperatur bestimmt werden und als Regelgröße für die Einstellung dienen.

Neben dem erfindungsgemäßen Arbeitsgerät umfaßt die vorliegende Erfindung weiterhin ein Verfahren zum Betrieb eines Arbeitsgerätes mit einem über mindestens ein Arbeitsantrieb bewegbaren Element, wobei mindestens ein Energierückgewinnungszylinder zur Energierückgewinnung aus der Bewegung des bewegbaren Elementes vorgesehen ist, welcher eine mit Gas befüllte Kammer aufweist. Erfindungsgemäß ist dabei vorgesehen, daß die Ansteuerung des Arbeitsantriebs in Abhängigkeit von der Temperatur des Gases in der mit Gas befüllten Kammer erfolgt. Hierdurch lassen sich die gleichen Vorteile erreichen, welche bereits hinsichtlich des Arbeitsgerätes beschrieben wurden. Vorteilhafterweise erfolgt das Verfahren dabei so, wie dies oben bereits beschrieben wurde.

Weiterhin umfaßt die vorliegende Erfindung ein Energierückgewinnungszylinder für ein Arbeitsgerät, wie es oben beschrieben wurde. Insbesondere umfaßt der Energierückgewinnungszylinder dabei einen Temperatursensor. Insbesondere kann der Temperatursensor dabei die Temperatur des Gases in der mit Gas gefüllten Kammer und/oder die Temperatur eines mit dieser Kammer wärmeleitend in Verbindung stehenden Elementes des Energierückgewinnungszylinders messen. Weitere Meßmethoden sind, wie zuvor schon ausgeführt, einsetzbar.

Weiterhin umfaßt die vorliegende Erfindung vorteilhafterweise eine Steuerung für einen Arbeitsantrieb für ein Arbeitsgerät, wie es oben näher beschrieben wurde. Insbesondere dient dabei ein Temperatursignal als Eingangsgröße der Steuerung. Insbesondere steuert die Steuerung dabei die Arbeitshydraulik eines Arbeitsantriebes in Abhängigkeit von dem Temperatursignal an.

Vorteilhafterweise sind dabei Energierückgewinnungszylinder bzw. die Steuerung so ausgeführt, wie dies oben hinsichtlich des Arbeitsgerätes bereits dargestellt wurde.

Besonders bevorzugte Einsatzmöglichkeiten der vorliegenden Erfindung sollen nun noch einmal kurz beschrieben werden:
Bei dem erfindungsgemäßen Arbeitsgerät handelt es sich insbesondere um ein verfahrbares Arbeitsgerät, insbesondere ein Bagger oder eine Maschine zum Materialumschlag.

Dieses weist ein über mindestens einen Arbeits-Antrieb, insbesondere einen Arbeits-Hydraulikzylinder bewegbares Element auf, wobei mindestens ein Energierückgewinnungszylinder zur Energierückgewinnung aus der Bewegung des bewegbaren Elements vorgesehen ist.

Dabei dient der Energierückgewinnungszylinder mit der mit Gas befüllten Kammer selbst als Energiespeicher für die Energierückgewinnung aus der Bewegung des bewegbaren Elements. Der von der Bodenseite des Energierückgewinnungszylinders gebildete Raum ist dabei vorteilhafterweise mit unter Druck stehendem Gas befüllt, welches bei einer Bewegung der Kolbenstange gegen den Boden komprimiert wird. Die dabei gespeicherte Energie steht dann bei einer Aufwärtsbewegung der Kolbenstange zur Unterstützung des Arbeitsantriebs, insbesondere des Arbeits-Hydraulikzylinders wieder zur Verfügung. In weiterhin vorteilhafter Weise ist die Kolbenstange des Energierückgewinnungszylinders hohl und zur Bodenseite hin offen, so dass das Innere der Kolbenstange einen Teil der mit Gas befüllten Kammer bildet.

Das bewegbare Element des erfindungsgemäßen Arbeitsgerätes ist vorteilhafterweise am Arbeitsgerät um eine vertikale Drehachse schwenkbar angelenkt und über den oder die Arbeitsantriebe, insbesondere Arbeits-Hydraulikzylinder in einer vertikalen Schwenkebene verschwenkbar. Insbesondere handelt es sich bei dem bewegbaren Element dabei um den Stiel eines Baggers oder den Ausleger einer Maschine zum Materialumschlag. Weiterhin vorteilhafterweise weist das verfahrbare Arbeitsgerät dabei einen Unterwagen mit Fahrwerk und einen darauf um eine vertikale Drehachse drehbar angeordneten Oberwagen auf, an welchem das bewegliche Element angelenkt ist.

Am bewegbaren Element kann dabei ein Arbeitswerkzeug, zum Beispiel eine Schaufel oder ein Greifer, angeordnet sein. Beim Absenken des bewegbaren Elementes wird die potentielle Energie des bewegbaren Elementes und des Arbeitswerkzeugs über den Energierückgewinnungszylinder gespeichert, um bei der Aufwärtsbewegung des bewegbaren Elements das Ausrüstungsgewicht zumindest teilweise wieder zu kompensieren. Hierdurch muß über die Arbeits-Hydraulikzylinder weniger Energie aufgewendet werden, um das bewegbare Element nach oben zu bewegen. Hierdurch verbessert sich die Energiebilanz des Arbeitsgerätes, da weniger installierte Motorleistung benötigt wird und der Kraftstoffverbrauch gesenkt wird.

Der erfindungsgemäße Energierückgewinnungszylinder ist dabei vorteilhafterweise wie der oder die Arbeits-Hydraulikzylindern zwischen einem Oberwagen des Arbeitsgerätes und dem bewegbaren Element angeordnet. Der Energierückgewinnungszylinder bewegt sich damit bei einer Bewegung des bewegbaren Elementes gleichzeitig zum Arbeits-Hydraulikzylinder.

Die vorliegende Erfindung wird nun anhand von Ausführungsbeispielen sowie Zeichnungen näher beschrieben.

Dabei zeigen
- Fig. 1: ein Ausführungsbeispiel eines erfindungsgemäßen Arbeitsgerätes mit zwei Arbeits-Hydraulikzylindern und einem Energierückgewinnungszylinder,
- Fig. 2 a: eine Prinzipdarstellung einer ersten Variante des erfindungsgemäßen Energierückgewinnungszylinders,

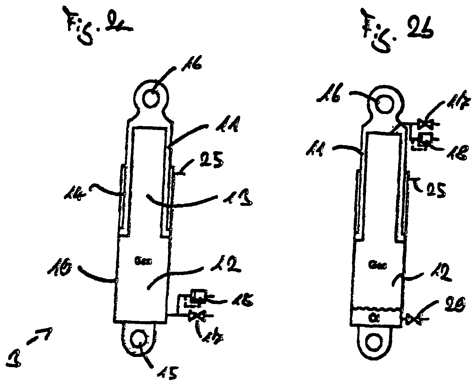

- Fig. 2 b: eine Prinzipdarstellung eines zweiten Variante des erfindungsgemäßen Energierückgewinnungszylinders,

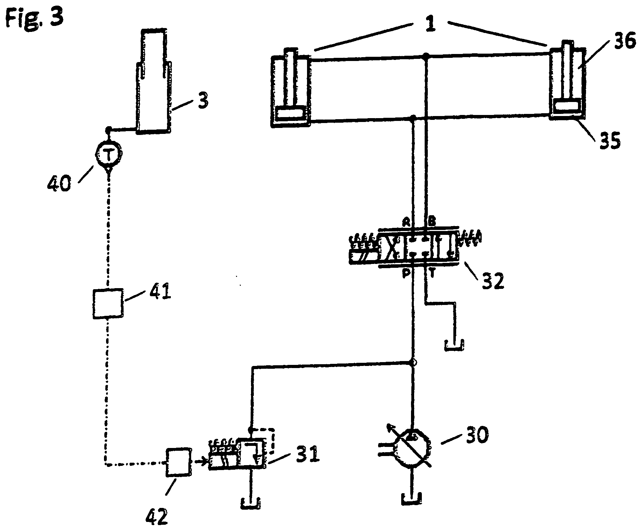

- Fig. 3: ein erstes Ausführungsbeispiel der erfindungsgemäßen Steuerung für den Arbeitsantrieb, wobei die maximale Kraft des Arbeitsantriebs in Abhängigkeit von der Temperatur des Gases im Energierückgewinnungszylinder eingestellt wird,

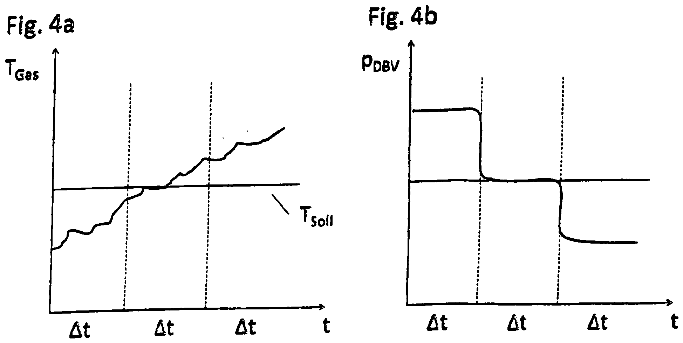

- Fig. 4a: ein Diagramm, welches beispielhaft einen Temperaturverlauf der Temperatur des Gases im Energierückgewinnungszylinder darstellt,
- Fig. 4b: ein Diagramm, welches den Primärdruck einer Arbeitshydraulik in Abhängigkeit von dem in Fig. 4a gezeigten Temperaturverlauf zeigt,

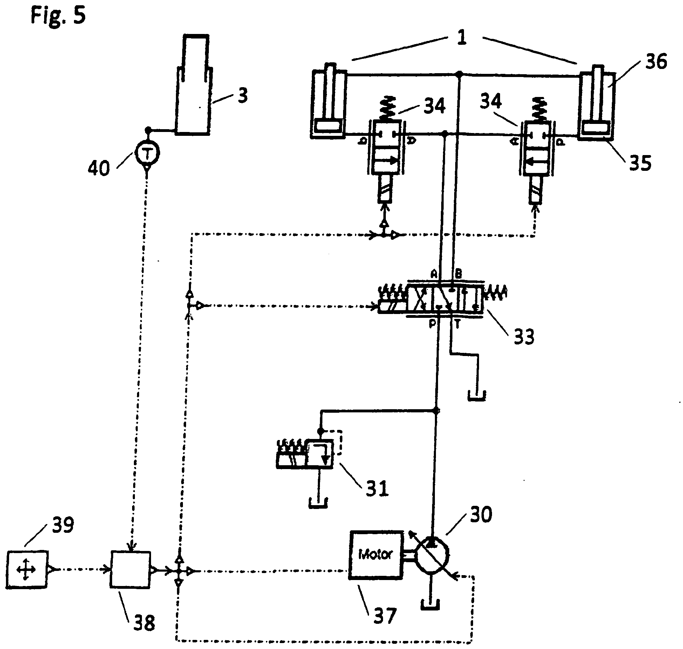

- Fig. 5: ein zweites Ausführungsbeispiel einer erfindungsgemäßen Steuerung für einen Arbeitsantrieb, wobei die Arbeitsdynamik in Abhängigkeit von der Temperatur des Gases im Energierückgewinnungszylinder eingestellt wird, insbesondere die maximale Bewegungsgeschwindigkeit,

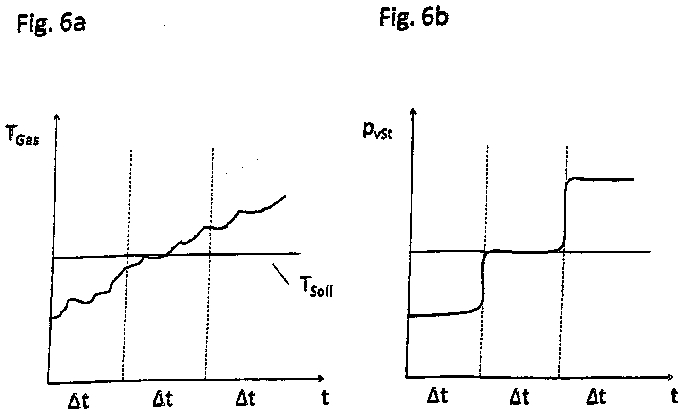

- Fig. 6a: ein Diagramm, welches einen Temperaturverlauf des Gases im Energierückgewinnungszylinder zeigt und
- Fig. 6b: ein Diagramm, welches einen Vorsteuerdruck eines Steuerventiles zur Ansteuerung der Bewegung eines Arbeitsantriebes in Abhängigkeit von dem in Fig. 6a gezeigten Temperaturverlauf zeigt.

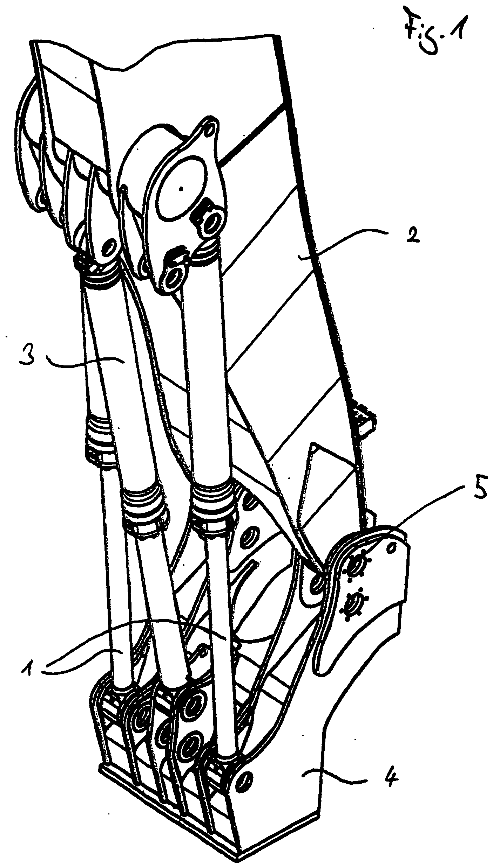

Anhand der Figuren 1 und 2 soll nun zunächst allgemein ein Ausführungsbeispiel eines Arbeitsgerätes mit einem Energierückgewinnungszylinder gezeigt werden, bei welchem die vorliegende Erfindung zum Einsatz kommen kann.

Das Arbeitgerät umfasst dabei einem bewegbares Element 2, welches über eine horizontal verlaufende Schwenkachse 5 an einer Schweißkonstruktion 4 des Arbeitsgerätes angelenkt ist. Bei dem Arbeitsgerät handelt es sich dabei um einen Hydraulikbagger, bei dem bewegbaren Element 2 um den Baggerausleger, welcher am Oberwagen des Baggers angelenkt ist. Der Oberwagen selbst ist dabei um eine vertikale Drehachse auf einem Unterwagen mit Fahrgestell drehbar angelenkt.

Zum Bewegen des bewegbaren Elementes 2 sind dabei zwei Arbeits-Hydraulikzylinder 1 vorgesehen, welche über entsprechende Anlenkpunkte am bewegbaren Element 2 sowie an der Schweißkonstruktion 4 des Oberwagens angelenkt sind. Weiterhin ist ein Ausführungsbeispiel eines erfindungsgemäßen Energierückgewinnungszylinders 3 vorgesehen, welcher wie die Arbeits-Hydraulikzylinder 1 zwischen dem bewegbaren Element 2 und dem Oberwagen des Arbeitsgerätes 4 angeordnet ist und der Energierückgewinnung aus der Bewegung des bewegbaren Elements dient. Der Energierückgewinnungszylinder 3 ist dabei zwischen den beiden Arbeits-Hydraulikzylindern 1 angeordnet.

An dem bewegbaren Element 2, in diesem Fall dem Baggerausleger, ist dabei üblicherweise eine Arbeitsausrüstung, zum Beispiel eine Baggerschaufel angeordnet. Beim Absenken des bewegbaren Elementes 2 soll nun die potentielle Energie des bewegbaren Elementes sowie der Arbeitsausrüstung rückgewonnen und gespeichert werden, um bei der Aufwärtsbewegung des bewegbaren Elements die statischen Kräfte, welche durch das Gewicht des bewegbaren Elements und der Arbeitsausrüstung sonst auf den Arbeits-Hydraulikzylindern lasten würden, zumindest teilweise zu kompensieren und so weniger Energie mittels der Arbeits-Hydraulikzylinder 1 zuführen zu müssen. Hierfür weist der erfindungsgemäße Hydraulikzylinder vorteilhafterweise eine mit Gas gefüllte Kammer auf. Bei einem Absenken des bewegbaren Elementes wird das Gas in der mit Gas gefüllten Kammer des Energierückgewinnungszylinders komprimiert, während es sich beim Anheben des bewegbaren Elementes ausdehnt und dabei die Arbeits-Hydraulikzylinder 1 unterstützt. Hierfür ist der erfindungsgemäße Energierückgewinnungszylinder vorteilhafterweise bodenseitig mit Gas befüllt und weist weiterhin vorteilhafterweise eine hohle, zur Bodenseite hin offene Kolbenstange auf.

In Fig. 2 a und 2 b sind nun Prinzipzeichnungen zweier Varianten eines Energierückgewinnungszylinders 3 gezeigt. Beide Ausführungsbeispiele weisen dabei einen Zylinder 10 auf, in welchem eine Kolbenstange 11 axial verschieblich gelagert ist. Die Kolbenstange 11 hat dabei die Form eines Hohlzylinders, so daß sich im Inneren der Kolbenstange 11 ein Hohlraum 13 ergibt, welcher zur Bodenseite 12 des Zylinders hin offen ist. Die Bodenseite 12 des Energierückgewinnungszylinders 3 und der Hohlraum 13 im Inneren der Kolbenstange 11 bilden dabei eine zusammenhängende Kammer, welche mit unter Druck stehendem Gas befüllt ist. Bei einer Bewegung der Kolbenstange 11 im Zylinder 10 verändert sich dabei die Größe der Bodenseite 12, so daß das mit Gas befüllte Volumen bei voll eingeschobener Kolbenstange 11 im Wesentlichen dem Hohlraum 13 im Inneren der hohlen Kolbenstange entspricht, bei voll ausgeschobener Kolbenstange dagegen dem Volumen dieses Hohlraums 13 plus dem Volumen des Zylinders 10.

Der Energierückgewinnungszylinder weist dabei ein bodenseitiges Lagerauge 15 und ein kolbenstangenseitiges Lagerauge 16 auf, mit welchen er am Arbeitsgerät und beweglichen Element angelenkt ist. Der Energierückgewinnungszylinder ist dabei zwischen bewegbarem Element und Arbeitsgerät so angelenkt, daß die Kolbenstange 11 durch das Gewicht des bewegbaren Elementes und der Arbeitsausrüstung nach unten gegen den Boden des Energierückgewinnungszylinders bewegt wird, so daß das Gasvolumen komprimiert wird. Durch die erfindungsgemäße Ausführung des Energierückgewinnungszylinders mit einer hohlen Kolbenstange 11 ist dabei auch bei eingefahrenem Zylinder ausreichend Gasvolumen vorhanden, um einen flachen Druckanstieg beim Senken der Arbeitsausrüstung zu ermöglichen. Umgekehrt ruht bei einer Aufwärtsbewegung des bewegbaren Elementes ein Teil des Gewichts auf dem Gasvolumen im Energierückgewinnungszylinder, so daß die Arbeits-Hydraulikzylinder nicht mehr die komplette statische Last aufbringen müssen.

Der Energierückgewinnungszylinder weist ein Befüllventil 17 zum Befüllen der Kammer mit Gas und ein Druckbegrenzungsventil 18 zur Begrenzung des Gasdrucks auf. Im ersten Ausführungsbeispiel in Fig. 2 a sind dabei das Befüllventil 17 und das Druckbegrenzungsventil 18 bodenseitig angeordnet. In dem in Figur 2 b gezeigten zweiten Ausführungsbeispiel sind das Befüllventil 17 und das Druckbegrenzungsventil 18 dagegen kolbenstangenseitig angeordnet.

Bei den in Fig. 2a und 2b gezeigten Energierückgewinnungszylindern handelt es sich um einen zweiseitige Hydraulikzylinder, so daß ein Ringraum 14 vorgesehen ist, welcher über einen Anschluß 12 an ein Hydrauliksystem des Arbeitsgerätes anschließbar ist. Auch die Bodenseite kann einen Anschluß aufweisen, über welche sie an ein Hydrauliksystem des Arbeitsgerätes anschließbar ist.

Wie in Fig. 2b gezeigt, kann das Gasvolumen im Energierückgewinnungszylinder dabei durch Zuführen oder Abführen von Öl zum Energierückgewinnungszylinder verändert werden. Hierfür ist im zweiten Ausführungsbeispiel in Fig. 2b ein Anschluß 20 zu Versorgung mit Öl vorgesehen, über welchen der Bodenraum des Energierückgewinnungszylinders an ein Hydrauliksystem des Arbeitsgerätes anschließbar ist.

Die Erfinder der vorliegenden Erfindung haben festgestellt, daß die Temperatur des Gases im Energierückgewinnungszylinder einen erheblichen Einfluß auf dessen Arbeitsweise hat. Erfindungsgemäß ist daher vorgesehen, den Arbeitsantrieb und insbesondere die Arbeitshydraulik in Abhängigkeit von dieser Temperatur anzusteuern, um so den Einfluß der Gastemperatur auf den Betrieb des Arbeitsgerätes möglichst gering zu halten.

Insbesondere ist dabei ein Temperatursensor vorgesehen, welcher die Temperatur des Gases in der mit Gas befüllten Kammer direkt oder indirekt mißt. Vorteilhafterweise wird dabei ein Steuersignal zu Ansteuerung des Arbeitsantriebs in Abhängigkeit von dem Temperatursignal des Temperatursensors eingestellt. Vorteilhafterweise wird das Temperatursignal dabei über einen bestimmten Zeitraum gemittelt und als Eingangsgröße der Steuerung herangezogen.

In Fig. 3 ist ein erstes Ausführungsbeispiel eines solchen Steuersystems gezeigt. Bei dem Arbeitsantrieb handelt es sich dabei um zwei Arbeitszylinder 1, wie diese bereits oben beschrieben wurden. Diese haben jeweils Druckkammern 35 und 36, welche über ein Steuerventil 32 mit einer Druckversorgung in Verbindung stehen. Die Druckversorgung wird dabei über eine Hydraulikpumpe 30 zur Verfügung gestellt. Der von der Pumpe 30 zur Verfügung gestellte Primärdruck wird dabei durch ein Primärdruckbegrenzungsventil 31 begrenzt. Vorteilhafterweise ist das Primärdruckbegrenzungsventil 31 dabei zwischen der Pumpe 30 und dem Steuerventil 32 angeordnet.

Erfindungsgemäß ist nun ein Temperatursensor 40 an dem Energierückgewinnungszylinder 3 angeordnet, welcher die Temperatur des Gases des Energierückgewinnungszylinders mißt. Beispielsweise mißt der Temperatursensor dabei die Gastemperatur direkt, so daß auf Temperaturschwankungen relativ rasch reagiert werden kann. Eine indirekte Messung der Temperatur mag aber vorteilhaft sein, da die Gastemperatur je nach dem Bewegungszustand sehr stark schwankt. Das Temperatursignal des Temperatursensors 40 geht als Eingangsgröße in eine Steuerung 41 ein, in welcher das Signal verarbeitet wird. Die Steuerung 41 steuert dabei eine Verstelleinheit 42 zum Verstellen des Druckbegrenzungsventils 31 an. Hierdurch kann der Primärdruck der Arbeithydraulik in Abhängigkeit von dem Temperatursignal eingestellt werden.

Durch diese Einstellung des Primärdrucks können zwei Probleme gelöst werden: Wenn die Temperatur im Energierückgewinnungszylinder 3 unter einen gewissen Sollwert T_{Soll} fällt (zum Beispiel bei Arbeitsbeginn im Winter), stellt der Energierückgewinnungszylinder 3 nicht den Solldruck bzw. die gewünschte Sollzylinderkraft zur Verfügung, um die bei Sollgastemperatur erreichbaren Traglasten zu erzielen. Um die Traglasten trotz geringerer Gastemperatur zu erreichen, wird daher erfindungsgemäß die primäre Druckbegrenzung der Auslegerzylinder in Abhängigkeit der Gastemperatur im erforderlichen und zulässigen Bereich temporär erhöht. Insbesondere kann dabei die Druckbegrenzung über den üblichen Sollwert von zum Beispiel 350 bar erhöht werden, um so die Gesamttraglast auch bei niedrigen Temperaturen auf einem gewünschten Sollwert zu halten.

Steigt die Gastemperatur in Folge der Arbeitstätigkeit oder in Folge externer Wärmzufuhr an, kann die Primärdruckbegrenzung der Auslegerzylinder wieder reduziert werden, zum Beispiel auf den Sollwert von zum Beispiel 350 bar.

Steigt dagegen die Gastemperatur im Energiegewinnungszylinder über einen gewissen Sollwert, so steigen die erreichbaren Traglasten an, wodurch die Belastung der Ausrüstung vergrößert und die Lebensdauer verringert wird. Um einer solchen höheren Belastung der Ausrüstung entgegenzuwirken, wird erfindungsgemäß die primäre Druckbegrenzung der Auslegerzylinder in Abhängigkeit von der Gastemperatur temporär reduziert, wenn diese über einem gewissen Sollwert steigt.

Durch diese Anpassung der Primärdruckbegrenzung der Auslegerzylinder in Abhängigkeit von der Gastemperatur im Energierückgewinnungszylinder können die gewünschten Traglasten gesichert und die Belastung der Ausrüstung begrenzt werden.

Für die Umsetzung der Ansteuerung stehen dabei eine Vielzahl von unterschiedlichen Möglichkeiten zur Verfügung. Insbesondere kann der Primärdruck in Abhängigkeit von der Temperatur des Gases im Energierückgewinnungszylinder in der Steuerung hinterlegt sein, beispielsweise in Form eines Kennfeldes. Vorteilhafterweise erfolgt die Ansteuerung dabei anhand einer gemittelten Gastemperatur. Dabei kann innerhalb eines gewissen Zeitintervalls jeweils die mittlere Gastemperatur bestimmt und als Steuergröße für die Primärdruckbegrenzung der Auslegerzylinder herangezogen werden.

In Fig. 4a ist dabei eine beispielhafte Temperaturentwicklung der Temperatur T_{Gas} im Energierückgewinnungszylinder über die Zeit gezeigt, wobei diese zunächst unterhalb der Solltemperatur T_{Soll} liegt und darauf folgend über diese steigt. Die Mittelung erfolgt dabei im Ausführungsbeispiel jeweils über Zeitabschnitte Δt. In dem ersten Zeitabschnitt Δt liegt die gemittelte Temperatur unterhalb der Solltemperatur T _{Soll}, so daß mit erhöhten Primärdruck P gearbeitet wird. Im nächsten Abschnitt Δt liegt die gemittelte Temperatur im wesentlichen im Bereich der Solltemperatur, so daß mit dem üblichen Primärdruck P gearbeitet wird. Im drauffolgenden Zeitabschnitt Δt liegt die Temperatur dagegen oberhalb der Solltemperatur T_{Soll}, so daß mit einem entsprechend niedrigeren Primärdruck P gearbeitet wird. Erfindungsgemäß wird damit für jedes Zeitintervall jeweils die mittlere Gastemperatur bestimmt und für diese Temperatur der entsprechende Primärdruck eingestellt.

Der einzustellende Primärdruck wird dabei vorteilhafterweise in Abhängigkeit von der Zylinderkraft des Energierückgewinnungszylinders bei der jeweiligen Temperatur und dem maximal zulässigen Primärdruck so bestimmt, daß die Schwankungen der gesamten Traglast des Arbeitsgerätes und die Schwankungen der Belastung der Ausrüstung aufgrund der Temperatur im Energierückgewinnungszylinder möglichst klein gehalten werden.

In Figur 5 ist nun ein zweites Ausführungsbeispiel der vorliegenden Erfindung gezeigt, durch welche der Einfluß der Gastemperatur auf die Arbeitsdynamik des Arbeitsgerätes möglichst klein gehalten wird.

Die Arbeitszylinder 1 weisen dabei wiederum Druckkammern 35 und 36 auf, durch deren Beaufschlagung mit Hydraulikfluid die Arbeitszylinder 1 bewegt werden können. Es ist eine Pumpe 30 vorgesehen, welche über ein Steuerventil 33 die Druckkammern 35 und 36 mit Hochdruck beaufschlagt. Es handelt sich dabei um eine Verstellpumpe, welche über eine Steuerung 38 angesteuert wird. Die Pumpe 30 wird dabei über einen Verbrennungsmotor 37 angetrieben, welcher ebenfalls von der Steuerung 38 angesteuert wird. Das Ventil 33 dient dabei zur Ansteuerung der Bewegungsrichtung und Bewegungsgeschwindigkeit der Hydraulikzylinder 1 zumindest beim Anheben. Das Ventil 33 wird dabei ebenfalls über die Steuerung 38 angesteuert. Weiterhin ist ein Tank vorgesehen, in welchen Hydraulikfluid abfließen kann. Zur Einstellung der Senkgeschwindigkeit sind dabei Ventile 34 vorgesehen, über welche die Geschwindigkeit, mit welcher Hydraulikfluid aus den Bodenkammern 35 zum Tank abfließen kann, und damit die Senkgeschwindigkeit eingestellt werden kann. Auch diese Ventile werden über die Steuerung 38 angesteuert.

Dabei ist ein Bedienelement 39 vorgesehen, über welches eine Bedienperson Eingabebefehle zur Bewegung des zu bewegenden Elementes, insbesondere des Auslegers eingeben kann. Diese Eingabebefehle werden in der Steuereinheit 38 verarbeitet und zur Ansteuerung der Ventile, der Pumpe 30 sowie des Motors 37 herangezogen.

Erfindungsgemäß ist nun ein Sensor 40 zum Bestimmen der Temperatur des Gases im Energierückgewinnungszylinder 3 vorgesehen, wobei die Meßsignale des Temperatursensors 40 in die Steuerung 38 eingehen. Die Ansteuerung der Bewegungsfunktion der Arbeitszylinder wird dabei so an die durch die Gastemperatur veränderte Charakteristik des Energierückgewinnungszylinders angepaßt, daß die Auswirkungen der sich ändernden Gastemperatur auf die Gesamtcharakteristik des Arbeitsgerätes zumindest teilweise ausgeglichen werden. Insbesondere wird dabei in Abhängigkeit der momentan mittleren Gastemperatur die Ansteuerung der Auslegerhebe- und Senkfunktion derart angepaßt, daß die maximale Senk- bzw. Hubgeschwindigkeit des Auslegers immer gleich gehalten werden kann.

Bei Senken wird dazu in Abhängigkeit von der Gastemperatur der Vorsteuerdruck oder der elektrischen Vorsteuersignale der jeweiligen Ventile, insbesondere der Ventile 34 (Rohrbruchsicherungen) gezielt erhöht oder reduziert, um den maximalen Ventilöffnungsquerschnitt anzupassen und damit die maximale Senkgeschwindigkeit annähernd konstant zu halten.

Beim Heben wird in Abhängigkeit von der Gastemperatur der Vorsteuerdruck oder der elektrischen Vorsteuersignale der jeweiligen Ventile, insbesondere des Steuerblocks 33 gezielt erhöht oder reduziert, um den Ventilöffnungsquerschnitt anzupassen und damit die maximale Hubgeschwindigkeit annähernd konstant zu halten.

Außerdem kann der Schwenkwinkel der Hydraulikpumpe 30 und die Drehzahl des Verbrennungsmotors 37 gezielt angepaßt werden.

Durch die Anpassung der Vorsteuerdrücke bzw. der elektrischen Vorsteuersignale in Abhängigkeit der Gastemperatur im Energiespeicherzylinder kann so die Arbeitsdynamik der Maschine und die Bauteilbelastung konstant gehalten werden. Der Energiespeicherzylinder kann dabei als autarkes System agieren, da die temperaturabhängige Anpassung der Arbeitsdynamik durch eine Modifikation des bestehenden Hydrauliksystems bzw. dessen Ansteuerung erfolgt.

Vorteilhafterweise wird dabei die Gastemperatur gemittelt und als Ansteuergröße herangezogen. Insbesondere wird dabei innerhalb eines gewissen Zeitintervalls jeweils die mittlere Gastemperatur bestimmt und als Regelgröße herangezogen.

In Fig. 6a ist dabei ein Diagramm eines beispielhaften Temperaturverlaufs der Temperatur T_{Gas} des Gases im Energiespeicherzylinder dargestellt. Wie in Fig. 4a liegt die Temperatur dabei in einem ersten Zeitabschnitt Δt unterhalb der Solltemperatur T_{Soll}, in einem mittleren Zeitabschnitt Δt im wesentlichen im Bereich der Solltemperatur und in einem dritten Zeitabschnitt Δt oberhalb der Solltemperatur. Dementsprechend wird der in Fig. 6d gezeigte Vorsteuerdruck für die Rohrbruchsicherungen 34, durch welche die Senkgeschwindigkeit eingestellt wird, verändert. Da der Arbeitsantrieb (Auslegerzylinder) und der Gaszylinder über den Baggerausleger gekoppelt sind, ergibt sich die Arbeitsdynamik der Arbeitsausrüstung aus dem Zusammenwirken des Gaszylinders und des Arbeitsantriebes.

Bei einer niedrigeren Temperatur als der Soll-Temperatur wird daher im ersten Zeitabschnitt Δt ein niedriger Vorsteuerdruck gewählt, um die durch den die geringere Gegenkraft des Energierückgewinnungszylinders durch einen entsprechend niedrigeren Vorsteuerdruck und damit geringeren maximalen Ventilöffnungsquerschnitt auszugleichen, um die maximale Senkgeschwindigkeit konstant zu halten. Im mittleren Zeitabschnitt Δt wird dagegen ein normaler Vorsteuerdruck gewählt, da die Temperatur im wesentlichen der Solltemperatur entspricht. Im dritten Zeitabschnitt Δt wird der Vorsteuerdruck erhöht und damit der maximale Ventilöffnungsquerschnitt vergrößert, um so eine konstante Senkgeschwindigkeit der Arbeitsausrüstung zu erreichen, um die durch die höhere Temperatur bedingte höhere Gegenkraft des Gaszylinders auszugleichen.

Beim Heben erfolgt die Ansteuerung des Vorsteuerdrucks des Steuerventils 33 genau umgekehrt, um die entsprechend niedrigere Hubgeschwindigkeit bei niedrigen Temperaturen bzw. größere Hubgeschwindigkeit bei großen Temperaturen auszugleichen.

Zusammenfassen läßt sich damit feststellen, daß sich die Arbeitsdynamik des erfindungsgemäßen Arbeitsgerätes beim Heben und Senken des bewegbaren Elementes durch die von der Gastemperatur abhängige Kraft-Weg-Kennlinie des Energierückgewinnungszylinders verändert, wenn die Ansteuerung des Arbeitsantriebs auf die Sollcharakteristik des Energierückgewinnungszylinders bei einer Solltemperatur abgestimmt ist.

Hierbei würden bei geringerer Gastemperatur als der Solltemperatur eine größere Senkgeschwindigkeit und eine kleinere Hubgeschwindigkeit resultieren, während bei größerer Gastemperatur als der Solltemperatur eine geringere Senkgeschwindigkeit und eine größere Hubgeschwindigkeit resultieren würden. Einerseits steigen die Bauteilbelastungen bei zu großen Hub- und Senkgeschwindigkeiten an, andererseits wird der Bediener bei wechselnder Arbeitsdynamik stärker beansprucht bzw. zum Teil sind Tätigkeiten wie zum Beispiel Schrott abwerfen nicht mehr möglich, wenn nicht mehr ausreichende Geschwindigkeiten zur Verfügung stehen.

Erfindungsgemäß werden daher die maximalen Vorsteuerdrücke bzw. elektrischen Vorsteuersignale und damit die maximalen Ventilöffnungsquerschnitte entsprechend angepaßt, um die Veränderung in der Charakteristik des Energiegewinnungszylinders auszugleichen und damit die Arbeitsgeschwindigkeit der Arbeitsausrüstung konstant zu halten. Beim Senken wird daher bei einer niedrigen Gastemperatur der maximale Ventilöffnungsquerschnitt vergrößert. Beim Heben wird umgekehrt der maximale Ventilöffnungsquerschnitt bei einer geringeren Gastemperatur erhöht, während der maximale Ventilöffnungsquerschnitt bei einer größeren Gastemperatur vermindert wird. uVorteilhafterweise wird dabei die Ansteuerung der Auslegerhebe- und -senkfunktion derart angepaßt, daß die maximale Senk- bzw. Hubgeschwindigkeit des Auslegers immer gleich gehalten werden kann.

Selbstverständlich können die beiden Ausführungsbeispiele der vorliegenden Erfindung, welche im ersten Ausführungsbeispiele den Einfluß der Gastemperatur auf die maximale Traglast, im zweiten Ausführungsbeispiel der Einfluß der Gastemperatur auf die Arbeitsdynamik zumindest teilweise ausgleichen, auch kombiniert werden.

## Patentansprüche

1. Arbeitsgerät, insbesondere Bagger oder Maschine zum Materialumschlag, mit einem über mindestens einen Arbeitsantrieb bewegbaren Element (2), wobei mindestens ein Energierückgewinnungszylinder (3) zur Energierückgewinnung aus der Bewegung des bewegbaren Elements (2) vorgesehen ist, welcher eine mit Gas befüllte Kammer aufweist,
**dadurch gekennzeichnet, dass** die Ansteuerung des Arbeitsantriebes in Abhängigkeit von der direkt oder indirekt bestimmten Temperatur des Gases in der mit Gas befüllten Kammer erfolgt.

2. Arbeitsgerät nach Anspruch 1 , wobei das Temperatursignal über einen bestimmten Zeitraum gemittelt und als Eingangsgröße der Steuerung herangezogen wird.

3. Arbeitsgerät nach einem der Ansprüche 1 oder 2, wobei die maximale Kraft des Arbeitsantrieb in Abhängigkeit von dem Temperatursignal eingestellt wird.

4. Arbeitsgerät nach einem der vorangegangenen Ansprüche, wobei die Arbeitsdynamik des Arbeitsantriebs in Abhängigkeit von dem Temperatursignal eingestellt wird.

5. Arbeitsgerät nach einem der vorangegangenen Ansprüche, wobei der Arbeitsantrieb mindestens einen Arbeits-Hydraulikzylinder (1) umfaßt, wobei die Ansteuerung der Hydraulik des Arbeits-Hydraulikzylinders (1) in Abhängigkeit von dem Temperatursignal erfolgt.

6. Arbeitsgerät nach Anspruch 5, wobei der Primärdruck der Hydraulik des Arbeitsantriebs in Abhängigkeit von dem Temperatursignal eingestellt wird, insbesondere durch Ansteuerung eines Primärdruckbegrenzungsventils (31).

7. Arbeitsgerät nach Anspruch 5 oder 6, wobei die Arbeitsdynamik der Hydraulik des Arbeits-Hydraulikzylinders (1) in Abhängigkeit von dem Temperatursignal eingestellt wird, insbesondere durch Einstellung des Vorsteuerdrucks und/oder Ansteuerstromes der Ventile zum Heben und/oder Senken des bewegbaren Elements und/oder durch Ansteuerung einer Arbeitspumpe und/oder eines Antriebsmotors.

8. Verfahren zum Betrieb eines Arbeitsgerätes, insbesondere nach einem der Ansprüche 1 bis 7, mit einem über mindestens einen Arbeitsantrieb bewegbaren Element (2), wobei mindestens ein Energierückgewinnungszylinder (3) zur Energierückgewinnung aus der Bewegung des bewegbaren Elements (2) vorgesehen ist, welcher eine mit Gas befüllte Kammer aufweist,
**dadurch gekennzeichnet,**
**daß** der Arbeitsantrieb in Abhängigkeit von der direkt oder indirekt bestimmten Temperatur des Gases in der mit Gas befüllten Kammer angesteuert wird.

## Claims

1. An implement, in particular an excavator or machine for material handling, with an element (2) movable via at least one working drive, wherein at least one energy recovery cylinder (3) is provided for energy recovery from the movement of the movable element (2), which includes a chamber filled with gas,
**characterized in that** the actuation of the working drive is effected in dependence on the directly or indirectly determined temperature of the gas in the chamber filled with gas.

2. The implement according to claim 1, wherein the temperature signal is averaged over a certain time period and used as input variable of the controller.

3. The implement according to any of the preceding claims, wherein the maximum force of the working drive is adjusted in dependence on the temperature signal.

4. The implement according to any of the preceding claims, wherein the work dynamics of the working drive is adjusted in dependence on the temperature signal.

5. The implement according to any of the preceding claims, wherein the working drive comprises at least one working hydraulic cylinder (1), wherein the actuation of the hydraulics of the working hydraulic cylinder (1) is effected in dependence on the temperature signal.

6. The implement according to claim 5, wherein the primary pressure of the hydraulics of the working drive is adjusted in dependence on the temperature signal, in particular by actuation of a primary pressure limiting valve (31).

7. The implement according to claim 5 or 6, wherein the work dynamics of the hydraulics of the working hydraulic cylinder (1) is adjusted in dependence on the temperature signal, in particular by adjusting the pilot pressure and/or actuation current of the valves for lifting and/or lowering the movable element and/or by actuating a working pump and/or a drive motor.

8. A method for operating an implement, in particular according to any of claims 1 to 7, with an element (2) movable via at least one working drive, wherein at least one energy recovery cylinder (3) is provided for energy recovery from the movement of the movable element (2), which includes a chamber filled with gas,
**characterized in**
**that** the working drive is actuated in dependence on the directly or indirectly determined temperature of the gas in the chamber filled with gas.

## Revendications

1. Machine de travail, en particulier excavateur ou machine pour le transfert de matériel, avec un élément (2) déplaçable par au moins un entraînement de travail, dans lequel au moins un cylindre de récupération d'énergie (3) est prévu pour la récupération d'énergie du mouvement de l'élément (2) mobile, qui comporte une chambre remplie de gaz,
**caractérisée en ce que** l'actionnement de l'entraînement de travail est effectué en dépendance de la température du gaz directement ou indirectement déterminée dans la chambre remplie de gaz.

2. Machine de travail selon la revendication 1, dans laquelle le signal de température est moyenné sur une certaine période et utilisé comme valeur d'entrée de l'unité de commande.

3. Machine de travail selon l'une quelconque des revendications 1 ou 2, dans laquelle la force maximale de l'entraînement de travail est ajustée en dépendance du signal de température.

4. Machine de travail selon l'une quelconque des revendications précédentes, dans laquelle la dynamique de travail de l'entraînement de travail est ajustée en dépendance du signal de température.

5. Machine de travail selon l'une quelconque des revendications précédentes, dans laquelle l'entraînement de travail comporte au moins un cylindre hydraulique de travail (1), l'actionnement du système hydraulique du cylindre hydraulique de travail (1) s'effectuant en dépendance du signal de température.

6. Machine de travail selon la revendication 5, dans laquelle la pression primaire du système hydraulique de l'entraînement de travail est ajustée en dépendance du signal de température, en particulier par actionnement d'une soupape de limitation de pression primaire (31).

7. Machine de travail selon la revendication 5 ou 6, dans laquelle la dynamique de travail du système hydraulique du cylindre hydraulique de travail (1) est ajustée en dépendance du signal de température, en particulier par ajustement de la pression pilote et/ou du courant d'actionnement des soupapes pour lever et/ou abaisser l'élément mobile et/ou par actionnement d'une pompe de travail et/ou d'un moteur d'entraînement.

8. Procédé pour faire fonctionner une machine de travail, en particulier selon l'une quelconque des revendications 1 à 7, avec un élément (2) déplaçable par au moins un entraînement de travail, dans lequel au moins un cylindre de récupération d'énergie (3) est prévu pour la récupération d'énergie du mouvement de l'élément mobile (2), qui comporte une chambre remplie de gaz,
**caractérisé en ce que**
l'entraînement de travail est actionné en dépendance de la température du gaz directement ou indirectement déterminée dans la chambre remplie de gaz.
